# EUROPEAN PATENT APPLICATION

(11) **EP 4 525 168 A1**
(43) Date of publication of application: **19.03.2025**
(21) Application number: 23802981.3
(22) Date of filing: 11.05.2023
(51) Int. Cl.: H01M 50/342, H01M 50/367, H01M 50/249, H01M 50/588, H01M 50/593

(54) **BATTERY CELL, BATTERY PACK AND VEHICLE**

(30) Priority: 12.05.2022 CN 202221130465 U
(71) Applicant: BYD Company Limited, Shenzhen, Guangdong 518118 (CN)
(72) Inventor: CHENG, Han, Shenzhen, Guangdong 518118 (CN); WANG, Xinyue, Shenzhen, Guangdong 518118 (CN); CHEN, Chong, Shenzhen, Guangdong 518118 (CN)
(74) Representative: Mathys & Squire
(86) International application number: PCT/CN2023/093419
(87) International publication number: WO 2023/217212

(57) **Abstract**

A battery cell (1), a battery pack (2) and a vehicle (4). The battery cell (1) comprises: a shell (100), which is provided with an inner cavity (110), a first side wall (120) and a second side wall (130), wherein the second side wall (130) is provided with an explosion-proof hole (131); the second side wall (130) supports a first bottom support (500) and a second bottom support (600), the first bottom support (500) and the second bottom support (600) are arranged in a spaced manner and define a first air channel (510), and the explosion-proof hole (131) is in communication with the inner cavity (110) by means of the first air channel (510); a terminal post (200), which is arranged on a side wall of the shell (100) other than the second side wall (130); and an explosion-proof valve (300), which is used for covering the explosion-proof hole (131). The first bottom support (500) and the second bottom support (600) jointly support a pole core (400), such that the pole core (400) is arranged spaced apart from the explosion-proof hole (131).

## Description

### CROSS-REFERENCE TO RELATED APPLICATIONS

The present disclosure claims priority to Chinese Patent Application No. "202221130465.5" filed by BYD Company Limited on May 12, 2022 and entitled "BATTERY CELL, BATTERY PACK AND VEHICLE".

### FIELD

The present disclosure relates to the technical filed of vehicles, and specifically, to a battery cell, a battery pack and a vehicle.

### BACKGROUND

In related art, a terminal post and an explosion-proof valve of a battery cell are generally arranged at the same end. When the battery cell experiences thermal runaway, the ejected high-temperature gas or flame will easily burn the terminal post of the battery cell, and devices connected to the battery cell, causing high-voltage arc discharge or secondary harm.

Furthermore, a supporting plate is arranged inside a housing of the battery cell to support the terminal post of the battery cell. To enable the communication between an inner cavity of the battery cell and the explosion-proof valve, a through hole is often provided on the supporting plate. However, the through hole on the supporting plate has a small cross-sectional area, so that the gas flow between the through hole and the explosion-proof valve is not smooth enough, the through hole is easy to be blocked, and the gas inside the battery cell can't be flowed to the outside normally, resulting in a poor explosion-proof and exhaust effect.

### SUMMARY

The present disclosure aims to solve at least one of the technical problems in the related art. To this end, an object of the present disclosure is to provide a battery cell. The battery cell has the advantages of high safety, smooth gas flow and good explosion-proof effect.

The present disclosure further provides a battery pack having the battery cell.

The present disclosure further provides a vehicle having the battery pack.

According to an embodiment in a first aspect of the present disclosure, a battery cell includes: a housing, having an inner cavity, and a first side wall and a second side wall opposite to each other, where the second side wall is provided with an explosion-proof hole; a first bottom support and a second bottom support, where the first bottom support and the second bottom support are arranged in the inner cavity, the second side wall supports the first bottom support and the second bottom support, the first bottom support is spaced apart from the second bottom support, the first bottom support and the second bottom support define a first gas channel, and the explosion-proof hole is in communication with the inner cavity through the first gas channel; a terminal post, where the terminal post is arranged on a side wall of the housing other than the second side wall; an explosion-proof valve, where the explosion-proof valve is mounted on the second side wall, and the explosion-proof valve is configured to cover the explosion-proof hole; and an electrode core, where the electrode core is arranged in the inner cavity and connected to the terminal post, the first bottom support and the second bottom support jointly support the electrode core, such that the electrode core is spaced apart from the explosion-proof hole.

The battery cell according to the embodiment of the present disclosure has the advantages of high safety, smooth gas flow and good explosion-proof effect.

According to some exemplary embodiments of the present disclosure, a side of at least one of the first bottom support and the second bottom support facing the second side wall is configured with a second gas channel, where the second gas channel is in communication with the first gas channel, at least one of the first bottom support and the second bottom support is provided with multiple exhaust holes, and the second gas channel is in communication with the inner cavity through the multiple exhaust holes.

According to some exemplary embodiments of the present disclosure, the side of at least one of the first bottom support and the second bottom support facing the second side wall is configured with multiple supporting ribs, and the second gas channel is defined between two adjacent supporting ribs.

According to some exemplary embodiments of the present disclosure, each of the supporting rib has a height ranging from 0.5 mm to 3 mm.

According to some exemplary embodiments of the present disclosure, the first gas channel extends along a direction perpendicular to the second side wall, and the second gas channel extends along a length direction of the second side wall.

According to some exemplary embodiments of the present disclosure, the dimension of the electrode core in the length direction of the second side wall is L₁, and the length of each of the first bottom support and the second bottom support is L₂, where the L₁ and L₂ meet: 0.04≤L₂/L₁≤0.45.

According to some exemplary embodiments of the present disclosure, Li and L₂ further meet: L₁≤500mm, and L₂≥20mm.

According to some exemplary embodiments of the present disclosure, the first bottom support includes a first side plate and a first bottom plate connected to each other. The first bottom plate is connected to the second side wall, and the first bottom plate extends along the length direction of the second side wall. One end of the first side plate is connected to the first bottom plate, and the other end of the first side plate is connected to one end of the first side wall. The second bottom support includes a second side plate and a second bottom plate connected to each other. The second bottom plate is connected to the second side wall, and the second bottom plate extends along the length direction of the second side wall. One end of the second side plate is connected to the second bottom plate, and the other end of the second side plate is connected to the other end of the first side wall. The first bottom plate is spaced apart from the second bottom plate, and the first bottom plate and the second bottom plate define the first gas channel.

According to some exemplary embodiments of the present disclosure, a side of the first side plate facing the electrode core is arranged with a first reinforcing rib, and the first reinforcing rib extends along a length direction of the first side plate. A side of the second side plate facing the electrode core is arranged with a second reinforcing rib, and the second reinforcing rib extends along the length direction of the second side plate.

According to some exemplary embodiments of the present disclosure, the first side plate is parallel to the second side plate and perpendicular to the second side wall.

According to some exemplary embodiments of the present disclosure, the first side plate is connected, through an insulating spacer ring, to the end of the first side wall, and the second side plate is connected, through the insulating spacer ring, to the other end of the first side wall. A side of the insulating spacer ring facing the inner cavity is arranged with a first limiting protrusion and a second limiting protrusion. The first side plate abuts against a side of the first limiting protrusion facing away from the second limiting protrusion. The second side plate abuts against a side of the second limiting protrusion facing away from the first limiting protrusion.

According to some exemplary embodiments of the present disclosure, the explosion-proof hole is located at a center of the electrode core in a thickness direction; and/or the explosion-proof hole is located at a center of the electrode core in the length direction of the second side wall.

According to some exemplary embodiments of the present disclosure, the battery cell further includes: an insulating film, where the insulating film is arranged at a side of the explosion-proof valve facing the inner cavity.

According to some exemplary embodiments of the present disclosure, the terminal post is arranged on the first side wall.

According to some exemplary embodiments of the present disclosure, the terminal post includes a positive electrode terminal post and a negative electrode terminal post. The housing is an aluminum housing, the positive electrode terminal post is electrically connected to the housing, and a difference between the voltage of the positive electrode terminal post and the voltage of the housing is not less than 0 V and not greater than 2.5 V.

According to some exemplary embodiments of the present disclosure, the terminal post includes a positive electrode terminal post and a negative electrode terminal post. The housing is a steel housing, the negative electrode terminal post is electrically connected to the housing, and a difference between the voltage of the housing and the voltage of the negative electrode terminal post is not less than 0 V and not greater than 2.5 V.

According to some exemplary embodiments of the present disclosure, the housing includes: a housing body, where the second side wall and the inner cavity are formed on the housing body, the housing body is provided with an opening facing the second side wall, and the opening is in communication with the inner cavity; a housing cover, where the housing cover is mounted to the housing body and covers the inner cavity, the first side wall is formed on the housing cover, and the terminal post is connected to the housing cover.

According to an embodiment in a second aspect of the present disclosure, a battery pack includes: a box; and the battery cell according to the embodiment in the first aspect of the present disclosure, where the battery cell is mounted in the box, with the explosion-proof valve facing a bottom wall of the box.

The battery pack according to the embodiment in the second aspect of the present disclosure has the advantages of high safety, smooth gas flow and good explosion-proof effect, by using the battery cell according to the embodiment in the first aspect of the present disclosure.

According to an embodiment in a third aspect of the present disclosure, a vehicle includes: the battery cell according to the embodiment in the first aspect of the present disclosure or the battery pack according to the embodiment in the second aspect of the present disclosure, where the first side wall is located above the second side wall.

The vehicle according to the embodiment in the third aspect of the present disclosure has the advantages of high safety, smooth gas flow and good explosion-proof effect, by using the battery cell according to the embodiment in the first aspect of the present disclosure or the battery pack according to the embodiment in the second aspect of the present disclosure.

Additional aspects and advantages of the present disclosure will be partly given in the following description, some of which will become apparent from the following description, or may be learned from practices of the present disclosure.

### BRIEF DESCRIPTION OF THE DRAWINGS

The above and/or other additional aspects and advantages of the present disclosure will become apparent and comprehensible from the description of embodiments in connection with accompanying drawings, in which:
FIG. 1 is a schematic structural view of a battery cell according to an embodiment of the present disclosure.
FIG. 2 is a cross-sectional view of a battery cell according to an embodiment of the present disclosure.
FIG. 3 is an enlarged view of part A in FIG. 2.
FIG. 4 is a schematic structural view of a first bottom support, a second bottom support and a housing cover according to an embodiment of the present disclosure.
FIG. 5 is a schematic structural view of a first bottom support, a second bottom support and a housing cover according to an embodiment of the present disclosure viewed from another perspective.
FIG. 6 is a schematic structural view of a second bottom support of a battery cell according to an embodiment of the present disclosure.
FIG. 7 is a schematic structural view of a second bottom support of a battery cell according to an embodiment of the present disclosure viewed from another perspective.
FIG. 8 is a schematic view of a battery pack according to an embodiment of the present disclosure.
FIG 9 is a schematic view of a vehicle according to an embodiment of the present disclosure.
FIG. 10 is a schematic view of a vehicle according to another embodiment of the present disclosure.

List of reference numerals:
1 battery cell,
100 housing, 110 inner cavity, 120 first side wall, 121 first limiting protrusion, 122 second limiting protrusion, 130 second side wall, 131 explosion-proof hole, 140 housing body, 150 housing cover,
200 terminal post, 210 positive electrode terminal post, 220 negative electrode terminal post, 300 explosion-proof valve, 400 electrode core,
500 first bottom support, 510 first gas channel, 520 second gas channel, 530 exhaust hole, 540 supporting rib, 550 first side plate, 551 first reinforcing rib, 560 first bottom plate,
600 second bottom support, 610 second side plate, 611 second reinforcing rib, 620 second bottom plate, 700 insulating film, 800 insulating spacer ring,
2 battery pack, 3 box, 4 vehicle.

### DETAILED DESCRIPTION

Embodiments of the present disclosure will be described in detail below, and examples thereof are illustrated in the drawings, where the same or similar elements or the elements having the same or similar functions are denoted by the same or similar reference numerals throughout the description. The embodiments described below with reference to the accompanying drawings are exemplary and merely intended to explain the present disclosure, and cannot be construed as a limitation on the present disclosure.

In the descriptions of the present disclosure, it should be understood that the terms "center", "upper", "lower", "front", "rear", "left", "right", "vertical", "horizontal", "top" , "bottom", inner", "outer", and others indicate directional or position relations based on the directional or position relations shown in the drawings, and are merely provided for ease or brevity of description of the present disclosure, but do not necessarily mean or imply that the indicated device or component is provided in the specified direction or constructed or operated in the specified direction. Therefore, such terms should not be construed as limiting of the present disclosure.

It is to be understood that the terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. Further, in the descriptions of the present disclosure, unless otherwise indicated, "multiple" means two or more.

A battery cell 1 according to an embodiment of the present disclosure will be described below with reference to the accompanying drawings.

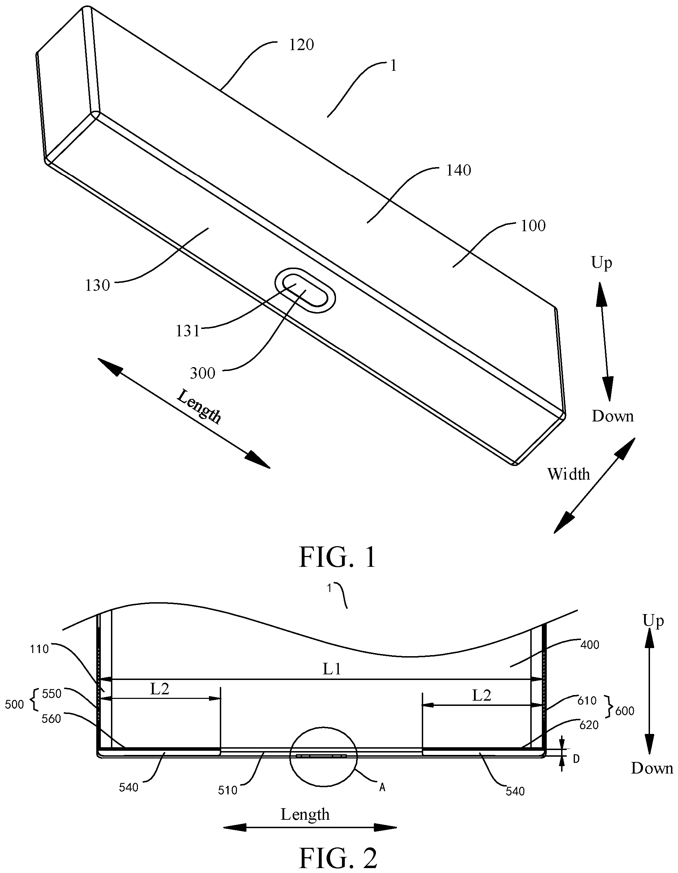

As shown in FIGs. 1 to 7, the battery cell 1 according to the embodiment of the present disclosure includes a housing 100, a first bottom support 500, a second bottom support 600, a terminal post 200, an explosion-proof valve 300 and an electrode core 400.

The housing 100 has an inner cavity 110, and a first side wall 120 and a second side wall 130 opposite to each other. The second side wall 130 is provided with an explosion-proof hole 131. The first bottom support 500 and the second bottom support 600 are arranged in the inner cavity 110. The second side wall 130 supports the first bottom support 500 and the second bottom support 600. The first bottom support 500 is spaced apart from the second bottom support 600, and the first bottom support 500 and the second bottom support 600 define a first gas channel 510. The explosion-proof hole 131 is in communication with the inner cavity 110 through the first gas channel 510. The terminal post 200 is arranged on a side wall of the housing 100 other than the second side wall 130. The explosion-proof valve 300 is mounted on the second side wall 130, and the explosion-proof valve 300 is configured to cover the explosion-proof hole 131. The electrode core 400 is arranged in the inner cavity 110 and connected to the terminal post 200. The first bottom support 500 and the second bottom support 600 jointly support the electrode core 400, such that the electrode core 400 is spaced apart from the explosion-proof hole 131.

The explosion-proof valve 300 has an explosion value. When the pressure in the inner cavity 110 of the battery cell 1 is less than the explosion value of the explosion-proof valve 300, the battery is in a normal working state. When the pressure in the inner cavity 110 is greater than or equal to the explosion value of the explosion-proof valve 300, the explosion-proof valve 300 is opened and the gas is rapidly discharged, to rapidly reduce the pressure in the inner cavity 110, and prevent the explosion of the battery cell 1. At this time, the explosion-proof valve 300 serves for explosion protection.

In the battery cell 1 according to the embodiment of the present disclosure, the housing 100 is provided with the inner cavity 110, and the first side wall 120 and the second side wall 130 opposite to each other, the terminal post 200 is arranged on a side wall of the housing 100 other than the second side wall 130, the second side wall 130 is provided with the explosion-proof hole 131, the explosion-proof valve 300 is mounted on the second side wall 130 and configured to cover the explosion-proof hole 131, and the electrode core 400 is arranged in the inner cavity 110 and connected to the terminal post 200. Since the terminal post 200 and the explosion-proof hole 131 are arranged on different walls of the housing 100 respectively, the terminal post 200 is spaced apart from the explosion-proof hole 131. In the case of thermal runaway of the battery cell 1, the high-temperature gas or flame ejected from the explosion-proof hole 131 will not burn the terminal post 200, to avoid the secondary harm and provide a high safety performance. Furthermore, the electrode core 400 is arranged in the housing 100 and spaced apart from the explosion-proof hole 131. Therefore, the electrode core 400 will not block the explosion-proof hole 131, and the gas in the first gas channel 510 is in communication with the outside through the explosion-proof hole 131.

In addition, the first bottom support 500 and the second bottom support 600 are arranged in the inner cavity 110, and the second side wall 130 supports the first bottom support 500 and the second bottom support 600. Namely, the previous structure of the housing 100 of the battery cell 1 does not need to be changed in the embodiment of the present disclosure, and the first bottom support 500 and the second bottom support 600 are mounted in the inner cavity 110 of the housing 100 as additional components. Therefore, the structure of the housing 100 remains unchanged, so the processing difficulty of the housing 100 is reduced.

Furthermore, the first bottom support 500 and the second bottom support 600 can support the electrode core 400, such that the electrode core 400 is spaced apart from the second side wall 130, and the electrode core 400 is spaced apart from the explosion-proof hole 131. As a result, the electrode core 400 will not block the explosion-proof hole 131 of the second side wall 130, and the gas flow through the explosion-proof hole 131 becomes much smooth when the explosion-proof valve 300 is opened.

Additionally, the first bottom support 500 and the second bottom support 600 are spaced apart and define the first gas channel 510, and the explosion-proof hole 131 is in communication with the inner cavity 110 through the first gas channel 510.

Since the explosion-proof valve 300 is arranged on the second side wall 130 at a different side from the terminal post 200, the space between the electrode core 400 and the second side wall 130 is small, and the gas generated by the electrode core 400 cannot be stored. If the first bottom support 500 and the second bottom support 600 are not arranged to form the first gas channel 510, the gas generated by the electrode core 400 will move to the space between the electrode core 400 and the first side wall 120. Consequently, when the pressure in the inner cavity 110 reaches the explosion value of the explosion-proof valve 300, the gas in the inner cavity 110 cannot be quickly exhausted through the explosion-proof hole 131, causing a high hazard.

In the present disclosure, by arranging the first bottom support 500 and the second bottom support 600 to form the first gas channel 510 storing the gas generated by the electrode core 400, when the pressure in the inner cavity 110 reaches the explosion value of the explosion-proof valve 300, the explosion-proof valve 300 is opened, and the first gas channel 510 is in communication with the outside through the explosion-proof hole 160. In this way, the gas in the battery cell 1 can be quickly discharged from the explosion-proof hole 131, the gas flows smoothly, the gas is exhausted freely, and the explosion-proof effect is better.

Therefore, the battery cell 1 according to the embodiment of the present disclosure has the advantages of high safety, smooth gas flow and good explosion-proof effect.

In some specific embodiments of the present disclosure, the terminal post 200 is arranged on the first side wall 120, and the explosion-proof hole 131 is arranged on the second side wall 130. Namely, the terminal post 200 and the explosion-proof hole 131 are arranged at two opposite sides of the housing 100. In this way, the terminal post 200 and the explosion-proof hole 131 are well spaced apart, and the distance between the terminal post 200 and the explosion-proof hole 131 is large. In the case of thermal runaway of the battery cell 1, the high-temperature gas or flame ejected from the explosion-proof hole 131 will not burn the terminal post 200, to effectively avoid the secondary harm and provide a high safety performance. Furthermore, the electrode core 400 will not block the explosion-proof hole 131, and the gas in the first gas channel 510 is in communication with the outside through the explosion-proof hole 131.

In some specific embodiments of the present disclosure, as shown in FIGs. 2 to 7, a side of at least one of the first bottom support 500 and the second bottom support 600 facing the second side wall 130 is configured with a second gas channel 520, and the second gas channel 520 is in communication with the first gas channel 510. At least one of the first bottom support 500 and the second bottom support 600 is provided with multiple exhaust holes 530, and the second gas channel 520 is in communication with the inner cavity 110 through the multiple exhaust holes 530.

The second gas channel 520 can also be configured to store the gas generated by the electrode core 400, to reduce the volume of the first gas channel 510. In this way, the inner cavity 110 can have more space to arrange the electrode core 400, to ensure the energy density of the battery cell 1. The first bottom support 500 may be configured with the second gas channel 520 and the exhaust hole 530, and the second bottom support 600 may be not configured with the second gas channel 520 and the exhaust hole 530. Alternatively, the first bottom support 500 may be not configured with the second gas channel 520 and the exhaust hole 530, and the second bottom support 600 may be configured with the second gas channel 520 and the exhaust hole 530. Alternatively the first bottom support 500 and the second bottom support 600 are both configured with the second gas channel 520 and the exhaust hole 530.

It can be understood that the electrode core 400 of the battery cell 1 generates gas. The gas generated by a portion of the electrode core 400 corresponding to the first gas channel 510 in the length direction of the second side wall 130 can directly flow through the first gas channel 510 to the explosion-proof hole 131, the gas generated by a portion of the electrode core 400 abutting against the first bottom support 500 can flow through the multiple exhaust holes 530 on the first bottom support 500 and the second gas channel 520 to the first gas channel 510 and the explosion-proof hole 131, and the gas generated by a portion of the electrode core 400 abutting against the second bottom support 600 can flow through the multiple exhaust holes 530 on the second bottom support 600 and the second gas channel 520 to the first gas channel 510 and the explosion-proof hole 131. Therefore, various portions of the electrode core 400 are maintained to be in communication with the explosion-proof hole 131, so the gas flows more smoothly, the exhaust effect of the battery cell 1 is further improved, and the explosion-proof effect is better.

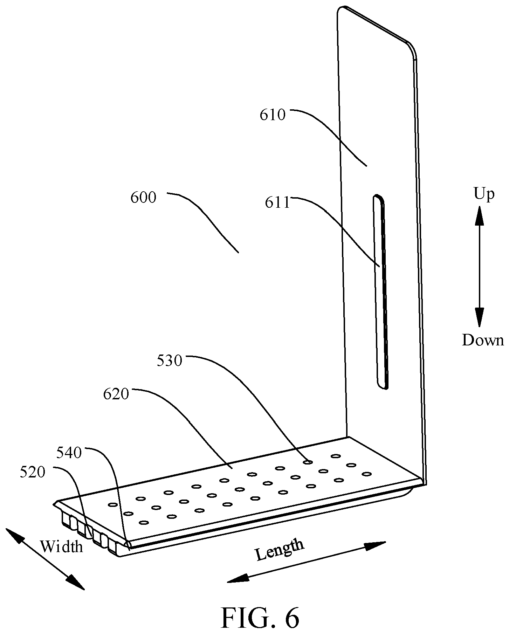

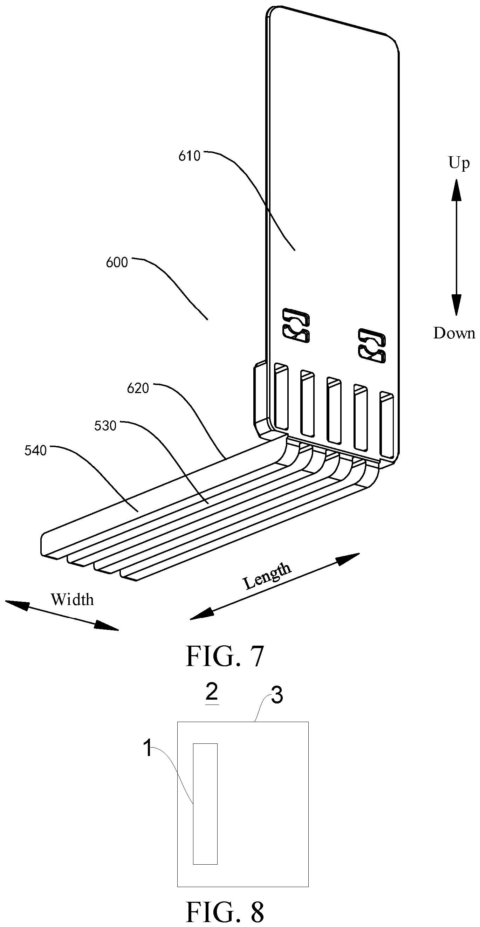

In some specific embodiments of the present disclosure, as shown in FIGs. 6 and 7, the side of at least one of the first bottom support 500 and the second bottom support 600 facing the second side wall 130 is configured with multiple supporting ribs 540, and the second gas channel 520 is defined between two adjacent supporting ribs 540.

The multiple supporting ribs 540 can increase the thickness of the first bottom support 500 and the thickness of the second bottom support 600, so that the structural strength of the first bottom support 500 and the second bottom support 600 is much higher, and the first bottom support 500 and the second bottom support 600 can support the electrode core 400 more stably. The electrode core 400 can be stably spaced apart from the explosion-proof hole 131 by the first bottom support 500 and the second bottom support 600, the space of the first gas channel 510 is larger, and the ventilation effect is better.

Furthermore, by directly defining the second gas channel 520 by adjacent supporting ribs 540, the structure of the second gas channel 520 is simpler, which simplifies the structure of the first bottom support 500 and the second bottom support 600. A side of the supporting ribs 540 facing away from the electrode core 400 may abut against the second side wall 130, so that the second gas channel 520 will not be blocked, and the gas flows more smoothly.

In some specific embodiments of the present disclosure, as shown in FIG. 2, each supporting rib 540 has a height ranging from 0.5 mm to 3 mm. For example, the height of each supporting rib 540 may be 0.5 mm, 1 mm, 1.5 mm, 2 mm, 2.5 mm or 3 mm.

Therefore, on one hand, the supporting rib 540 can have a larger height, so that the second gas channel 520 has more space, the second gas channel 520 is unlikely to be blocked and can hold more gas, the gas generated by the electrode core 400 can be quickly exhausted for explosion protection, the gas flows more smoothly, and the explosion-proof effect is better. On the other hand, the height of the supporting rib 540 cannot be too large, so the space occupied by the first bottom support 500 and the second bottom support 600 in the battery cell 1 will not be too large, to avoid large loss of the capacity of the electrode core 400, and ensure the energy density of the battery cell 1.

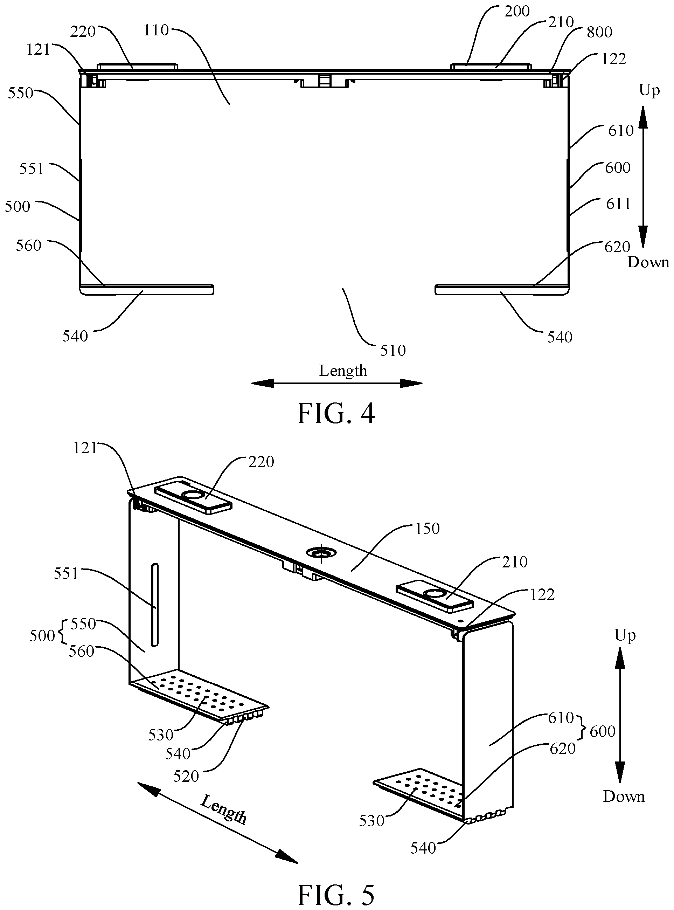

In some specific embodiments of the present disclosure, as shown in FIGs. 2 and 4, the first gas channel 510 extends along a direction perpendicular to the second side wall 130, and the second gas channel 520 extends along the length direction of the second side wall 130.

It is to be understood that the explosion-proof hole 131 may penetrate the second side wall 130 along the thickness direction of the second side wall 130. The extending direction of the first gas channel 510 is parallel to that of the explosion-proof hole 131. The extending length of the first gas channel 510 may be short, whereby the gas flow can quickly flow through the first gas channel 510 and be discharged to the outside of the battery cell 1 through the explosion-proof hole 131. Furthermore, the second gas channel 520 occupies less space in the inner cavity 110 in a direction from the first side wall 120 to the second side wall 130. Therefore, while ensuring the fast flow of the gas, the space occupied by the first bottom support 500 and the second bottom support 600 is reduced, thus further avoiding the loss of the capacity of the electrode core 400, and ensuring the energy density of the battery cell 1.

In some specific embodiments of the present disclosure, as shown in FIG. 2, the dimension of the electrode core 400 in the length direction of the second side wall 130 is L₁, and the length of each of the first bottom support 500 and the second bottom support 600 is L₂, where L₁ and L₂ meet: 0.04≤L₂/L₁≤0.45. For example, L₂/L₁ may be 0.04, 0.1, 0.15, 0.2, 0.25, 0.3, 0.35, 0.4 or 0.45.

In this way, on one hand, the dimension of the first bottom support 500 and the second bottom support 600 in the length direction of the second side wall 130 is avoided to be too small, and the first bottom support 500 and the second bottom support 600 can stably support the electrode core 400, whereby the electrode core 400 can be avoided to sink to directly contact with the explosion-proof hole 131, normal flow through the explosion-proof hole 131 is ensured, and the explosion-proof effect is good. On the other hand, the dimension of the first bottom support 500 and the second bottom support 600 in the length direction of the second side wall 130 is avoided to be too large, the dimension of the first gas channel 510 in the length direction of the second side wall 130 can be large, the first gas channel 510 has more space, the first bottom support 500 and the second bottom support 600 will not cover the explosion-proof hole 131, the gas is exhausted freely, the material for processing the first bottom support 500 and the second bottom support 600 is reduced, and the weight of the first bottom support 500 and the second bottom support 600 is reduced, thus saving the cost.

Further, the dimension L₁ of the electrode core 400 in the length direction of the second side wall 130 is ≤500 mm, and the length L₂ of each of the first bottom support 500 and the second bottom support 600 is ≥ 20 mm.

Therefore, the length of the electrode core 400 will not be too large, such that the whole length of the battery cell 1 will not be too large, thus improving the overall structural strength of the battery cell 1. In addition, the length of the first bottom support 500 and the length of the second bottom support 600 are not too short. Accordingly, the length of the first gas channel 510 is kept long enough, so that the first gas channel 510 has large space, the first gas channel 510 is uneasy to be blocked, and the gas is exhausted more smoothly.

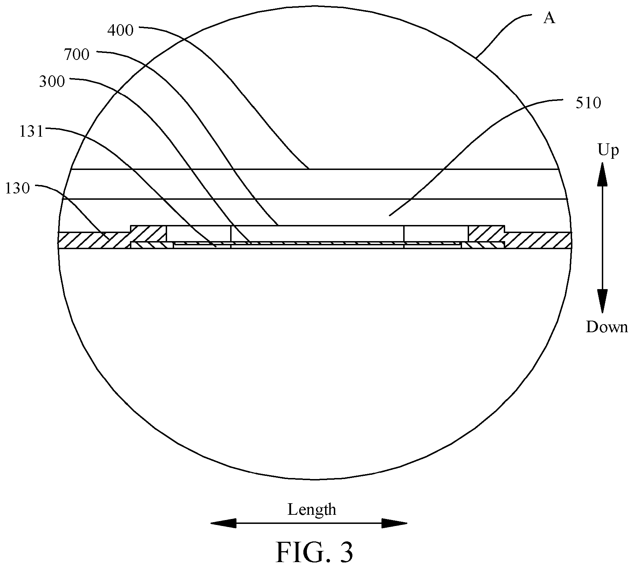

In some specific embodiments of the present disclosure, as shown in FIG. 3, the explosion-proof valve 300 is arranged at a side of the second side wall 130 facing the inner cavity 110 or at a side of the second side wall 130 facing away from the inner cavity 110. The explosion-proof valve 300 can be welded to the second side wall 130.

For example, the explosion-proof valve 300 is arranged at the side of the second side wall 130 facing the inner cavity 110. As a result, the explosion-proof valve 300 will not protrude from the housing 100, and the housing 100 can protect the explosion-proof valve 300. Alternatively, the explosion-proof valve 300 is arranged at the side of the second side wall 130 facing away from the inner cavity 110. Namely, the explosion-proof valve 300 is arranged outside the housing 100. In this case, the assembly space outside the housing 100 is larger, and the assembly of the explosion-proof valve 300 to the housing 100 is more convenient.

In some specific embodiments of the present disclosure, the battery cell 1 further includes a protective sheet (not shown). The protective sheet is connected to the housing 100 and located at a side of the explosion-proof valve 300 facing away from the inner cavity 110.

The protective sheet can shield the explosion-proof valve 300. Whether the explosion-proof valve 300 is mounted at the side of the second side wall 130 facing the inner cavity 110 or the explosion-proof valve 300 is arranged at the side of the second side wall 130 facing away from the inner cavity 110, the protective sheet can prevent other parts of the vehicle 4 from direct contact with the explosion-proof valve 300. Moreover, the protective sheet can also protect the explosion-proof valve 300 during the transportation of the battery cell 1, to avoid the damage to the explosion-proof valve 300 due to bumps during transportation, and extend the service life of the battery cell 1.

In some specific embodiments of the present disclosure, as shown in FIGs. 6 and 7, the first bottom support 500 includes a first side plate 550 and a first bottom plate 560 connected to each other, and the second bottom support 600 includes a second side plate 610 and a second bottom plate 620 connected to each other.

The first bottom plate 560 is connected to the second side wall 130, and the first bottom plate 560 extends along the length direction of the second side wall 130. One end of the first side plate 550 is connected to the first bottom plate 560, and the other end of the first side plate 550 is connected to one end of the first side wall 120. The second bottom plate 620 is connected to the second side wall 130, and the second bottom plate 620 extends along the length direction of the second side wall 130. One end of the second side plate 610 is connected to the second bottom plate 620, and the other end of the second side plate 610 is connected to the other end of the first side wall 120. The first bottom plate 560 and the second bottom plate 620 are spaced apart, and the first bottom plate 560 and the second bottom plate 620 define the first gas channel 510.

In this way, the contact area of the first bottom support 500 and the second bottom support 600 with the side walls of the inner cavity 110 is larger, the connected structure is more stable and reliable, so as to prevent the change of relative positions of the first bottom support 500 and the second bottom support 600 to the housing 100. By arranging the first side plate 550 and the second side plate 610, two force transmission paths are added between the first side wall 120 and the second side wall 130, making the structural strength of the housing 100 higher.

It is to be understood that the other end of the first side plate 550 may be directly or indirectly connected to the first side wall 120. Namely, the other end of the first side plate 550 can be directly connected to one end of the first side wall 120; or the first side plate 550 can be connected, through an insulating spacer ring 800, to one end of the first side wall 120. Similarly, the other end of the second side plate 610 may be directly or indirectly connected to the first side wall 120. Namely, the other end of the second side plate 610 can be directly connected to the other end of the first side wall 120; or the second side plate 610 can be connected, through the insulating spacer ring 800, to the other end of the first side wall 120.

In some specific embodiments of the present disclosure, as shown in FIGs. 4 to 6, a side of the first side plate 550 facing the electrode core 400 is arranged with a first reinforcing rib 551, and the first reinforcing rib 551 extends along a length direction of the first side plate 550. A side of the second side plate 610 facing the electrode core 400 is arranged with a second reinforcing rib 611, and the second reinforcing rib 611 extends along a length direction of the second side plate 610.

By arranging the first reinforcing rib 551, the structural strength of the first side plate 550 is improved, the overall structural strength of the first bottom support 500 is higher, and the connection between the first side plate 550 and the first side wall 120 is more reliable. By arranging the second reinforcing rib 611, the structural strength of the second side plate 610 is improved, the overall structural strength of the second bottom support 600 is higher, and the connection between the second side plate 610 and the first side wall 120 is more reliable. Accordingly, the first bottom support 500 and the second bottom support 600 can enhance the structural strength of the housing 100.

In some specific embodiments of the present disclosure, as shown in FIGs. 2 and 4, the first side plate 550 is parallel to the second side plate 610 and perpendicular to the second side wall 130.

It can be understood that side walls of the housing 100 connected to two ends of the second side wall 130 in the length direction are perpendicular to the second side wall 130. Namely, both the first side plate 550 and the second side plate 610 are parallel to the side walls connected to two ends of the second side wall 130 in the length direction. Thus, the first side plate 550 and the second side plate 610 can be attached to the side walls of the inner cavity 110. As a result, the first side plate 550 and the second side plate 610 occupy less space in the inner cavity 110, and the first side plate 550 and the second side plate 610 cause less loss of the capacity of the electrode core 400, thereby ensuring the energy density of the battery cell 1.

In some specific embodiments of the present disclosure, a side of the insulating spacer ring 800 facing the inner cavity 110 may be defined with a first limiting protrusion 121 and a second limiting protrusion 122. The first side plate 550 abuts against a side of the first limiting protrusion 121 facing away from the second limiting protrusion 122, and the second side plate 610 abuts against a side of the second limiting protrusion 122 facing away from the first limiting protrusion 121.

For example, one end of the first side plate 550 facing away from the second side wall 130 may be connected to the first limiting protrusion 121 by, without limitation, hot melt connection, snap-fit connection or pin-hole connection. One end of the second side plate 610 facing away from the second side wall 130 may be connected to the second limiting protrusion 122 by, without limitation, hot melt connection, snap-fit connection or pin-hole connection.

In this manner, the first limiting protrusion 121 and the second limiting protrusion 122 can limit the first bottom support 500 and the second bottom support 600 in the length direction of the first side wall 120, to avoid the change of the relative position of the first side wall 120, the first bottom support 500 and the second bottom support 600, and allow the first bottom support 500 and the second bottom support 600 to support the electrode core 400 more stably.

In some specific embodiments of the present disclosure, as shown in FIG. 1, the explosion-proof hole 131 is located at a center of the electrode core 400 in a thickness direction; and/or, the explosion-proof hole 131 is located at a center of the electrode core 400 in the length direction of the second side wall 130.

For example, the explosion-proof hole 131 can be located at the center of the electrode core 400 in the thickness direction, and at the center of the electrode core 400 in the length direction of the second side wall 130. Generally, the gas is mostly generated at the center of the electrode core 400. By arranging the explosion-proof hole 131 at the center of the electrode core 400, the explosion-proof valve 300 can more effectively sense the gas pressure in the battery cell 1. When the gas pressure in the battery cell 1 is too high, the explosion-proof valve 300 can be immediately opened to exhaust the gas in the battery cell 1, thereby further improving the explosion-proof effect of the battery cell 1.

In addition, such an arrangement makes the structure of the housing 100 symmetrical in the length direction of the second side wall 130 and the housing 100 have the same structural strength at two ends of the second side wall 130 in the length direction. This is beneficial to maintaining the consistency in structural strength of the housing 100.

In some specific embodiments of the present disclosure, the battery cell 1 further includes an insulating film 700, where the insulating film 700 is arranged at a side of the explosion-proof valve 300 facing the inner cavity 110. For example, the insulating film 700 may be polypropylene (PP), polyethylene (PE) or other polyester compounds.

Particularly, the insulating film 700 is arranged in the inner cavity 110 and between the explosion-proof valve 300 and the electrode core 400. By arranging the insulating film 700, the explosion-proof valve 300 can be isolated from the electrolyte solution, to prevent the corrosion of the explosion-proof valve 300 due to long time of soaking in the electrolyte solution, prevent the battery from leakage, avoid the increase or decrease of the opening pressure of the explosion-proof valve 300 due to the influence of the electrolyte solution, and enable the explosion-proof valve 300 to be in a stable and reliable working state.

In some specific embodiments of the present disclosure, as shown in FIGs. 4 and 5, the terminal post 200 includes a positive electrode terminal post 210 and a negative electrode terminal post 220. The housing 100 is an aluminum housing. In this case, the explosion-proof valve 300 is made of aluminum, the positive electrode terminal post 210 is electrically connected to the housing 100, and a difference between the voltage of the positive electrode terminal post 210 and the voltage of the housing 100 ranges from 0 V to 2.5V. The difference between the voltage of the positive electrode terminal post 210 and the voltage of the housing 100 refers to a value obtained by the voltage of the positive electrode terminal post 210 minus the voltage of the housing 100.

It is to be understood that the housing 100 and the explosion-proof valve 300 can be made of metal aluminum or an aluminum alloy, and the electrolyte solution in the battery cell 1 is usually a lithium ion electrolyte solution. Aluminum will react with lithium ions at a low potential to form a metal compound. Therefore, if the voltage difference between the positive electrode terminal post 210 and the housing 100 is small, the voltage of the housing 100 will approximate the voltage of the positive electrode terminal post 210, that is, the potential of the housing 100 is increased. By means of this, the housing 100 and the explosion-proof valve 300 are prevented from being corroded by the lithium ion electrolyte solution, and the housing 100 and the explosion-proof valve 300 mounted on the housing 100 are protected, thus further preventing the housing 100 and the explosion-proof valve 300 from being corroded, and prolonging the service life of the battery cell 1.

Further, a resistor is connected between the positive electrode terminal post 210 and the housing 100. Therefore, even if the positive electrode terminal post 210 and the housing 100 of the battery cell 1 form a loop, for example, when the positive electrode terminal post 210 of the battery cell 1 is connected to a negative electrode of a battery without a resistor and the housing 100 is connected to a positive electrode of the battery, the resistor between the positive electrode terminal post 210 and the housing 100 of the battery cell 1 can protect the battery cell 1, to avoid the short circuit of the battery cell 1, and enable the battery cell 1 to have a high safety performance during use.

In some specific embodiments of the present disclosure, as shown in FIGs. 4 and 5, the terminal post 200 includes a positive electrode terminal post 210 and a negative electrode terminal post 220. The housing 100 is a steel housing. In this case, the explosion-proof valve 300 may be made of steel. The negative electrode terminal post 220 is electrically connected to the housing 100, and a difference between the voltage of the housing 100 and the voltage of the negative electrode terminal post 220 ranges from 0V to 2.5V. The difference between the voltage of the housing 100 and the voltage of the negative electrode terminal post 220 refers to a value obtained by the voltage of the housing 100 minus the voltage of the negative electrode terminal post 220.

It is to be understood that steel will react with lithium ions at a high potential to form a metal compound. If the voltage difference between the negative electrode terminal post 220 and the housing 100 is small, the voltage of the housing 100 will approximate the voltage of the negative electrode terminal post 220, that is, the potential of the housing 100 is reduced. By means of this, the housing 100 and the explosion-proof valve 300 are prevented from being corroded by the lithium ion electrolyte solution, and the housing 100 and the explosion-proof valve 300 mounted on the housing 100 are protected, thus further preventing the housing 100 and the explosion-proof valve 300 from being corroded, and prolonging the service life of the battery cell 1.

Further, a resistor is connected between the negative electrode terminal post 220 and the housing 100. Therefore, even if the negative electrode terminal post 220 and the housing 100 of the battery cell 1 form a loop, for example, when the negative electrode terminal post 220 of the battery cell 1 is connected to a positive electrode of a battery without a resistor and the housing 100 is connected to a negative electrode of the battery, the resistor between the negative electrode terminal post 220 and the housing 100 of the battery cell 1 can protect the battery cell 1, to avoid the short circuit of the battery cell 1, and enable the battery cell 1 to have a high safety performance during use.

In some specific embodiments of the present disclosure, as shown in FIGs. 1, 2 and 5, the housing 100 includes a housing body 140 and a housing cover 150. The housing 100 may be made of an aluminum alloy.

The second side wall 130 and the inner cavity 110 are formed on the housing body 140, the housing body 140 is provided with an opening facing second side wall 130, and the opening is in communication with the inner cavity 110. The housing cover 150 is mounted to the housing body 140 and covers the inner cavity 110, the first side wall 120 is formed on the housing cover 150, and the terminal post 200 is connected to the housing cover 150. By configuring the housing 100 to include separate components, the processing difficulty of the housing 100 is reduced, to simplify the processing steps of the housing body 140 and the housing cover 150, and make the processing more convenient; and also, it is convenient to put the electrode core 400 and the electrolyte solution into the inner cavity 110.

As shown in FIG. 8, a battery pack 2 according to an embodiment in the second aspect of the present disclosure includes a box 3 and the battery cell 1 according to the embodiment in the first aspect of the present disclosure. The battery cell 1 is mounted in the box 3, with the explosion-proof valve 300 facing a bottom wall of the box 3. Therefore, in the case of thermal runaway of the battery cell, high-temperature gas or flame can be ejected through the explosion-proof valve 300 to the bottom of the box 3.

The battery pack 2 according to the embodiment of the present disclosure, has the advantages of high safety, smooth gas flow and good explosion-proof effect, by using the battery cell 1 according to the embodiment the present disclosure.

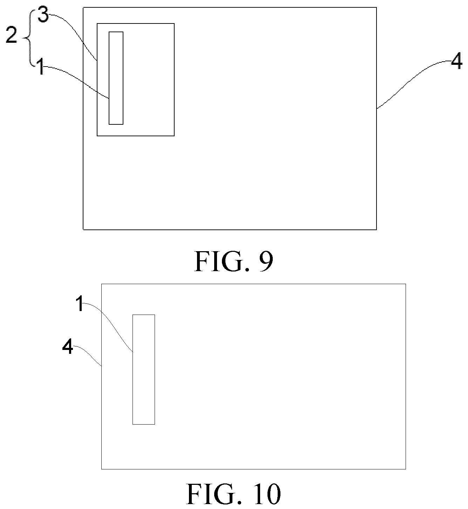

As shown in FIGs. 9 and 10, a vehicle 4 according to an embodiment in the third aspect of the present disclosure includes the battery cell 1 according to the embodiment in the first aspect of the present disclosure or the battery pack 2 according to the embodiment in the second aspect of the present disclosure. The battery pack 2 is mounted to a vehicle body of the vehicle 4 or a chassis of the vehicle 4 by means of the box 3. Alternatively, the vehicle 4 includes the battery cell 1 according to the embodiment of the present disclosure, where the battery cell 1 is mounted to the vehicle body of the vehicle 4 or the chassis of the vehicle 4. That is, the battery cell 1 can be directly mounted to the vehicle body of the vehicle 4 or the chassis of the vehicle 4. Alternatively, the battery cell 1 is mounted in the box 3 and assembled into the battery pack 2, and the battery pack 2 is mounted to the vehicle body of the vehicle 4 or the chassis of the vehicle 4 by means of the box 3.

The vehicle 4 according to the embodiment of the present disclosure has the advantages of high safety, smooth gas flow and good explosion-proof effect, by using the battery cell 1 according to the embodiment the present disclosure and the battery pack 2 according to the embodiment the present disclosure.

In some specific embodiments of the present disclosure, the battery cell 1 or the battery pack 2 is mounted to the vehicle body of the vehicle 4 or the chassis of the vehicle 4, with the first side wall 120 located above the second side wall 130.

Particularly, the first side wall 120 may face the interior of the vehicle 4, and the second side wall 130 may face the exterior of the vehicle 4. Namely, the explosion-proof valve 300 may face away from the passenger compartment of the vehicle 4. When the battery cell 1 experiences thermal runaway, high-temperature gas or flame can be ejected through the explosion-proof valve 300 in a direction away from the passenger compartment of the vehicle 4, thereby preventing the flame from being directly ejected into the car, reducing the probability of injury of passengers in the vehicle, and further protecting the safety of the passengers in the vehicle.

Other configurations and operations of the battery cell 1, the battery pack 2, and the vehicle 4 according to the embodiments of the present disclosure are known to those of ordinary skill in the art and will not be described in detail herein.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials or characteristics may be combined in any suitable manner in one or more embodiments.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery cell (1), comprising:
a housing (100), the housing (100) having an inner cavity (110) and a first side wall (120) and a second side wall (130) opposite to each other, and the second side wall (130) being provided with an explosion-proof hole (131);
a first bottom support (500) and a second bottom support (600), the first bottom support (500) and the second bottom support (600) being arranged in the inner cavity (110), the second side wall (130) supporting the first bottom support (500) and the second bottom support (600), the first bottom support (500) being spaced apart from the second bottom support (600), the first bottom support (500) and the second bottom support (600) defining the first gas channel (510), and the explosion-proof hole (131) being in communication with the inner cavity (110) through the first gas channel (510);
a terminal post (200), the terminal post (200) being arranged on a side wall of the housing (100) other than the second side wall (130);
an explosion-proof valve (300), the explosion-proof valve (300) being mounted on the second side wall (130), and the explosion-proof valve (300) being configured to cover the explosion-proof hole (131); and
an electrode core (400), the electrode core (400) being arranged in the inner cavity (110) and connected to the terminal post (200), and the first bottom support (500) and the second bottom support (600) jointly supporting the electrode core (400), and the electrode core (400) is spaced apart from the explosion-proof hole (131).

2. The battery cell (1) according to claim 1, wherein a side of at least one of the first bottom support (500) and the second bottom support (600) facing the second side wall (130) is configured with a second gas channel (520), the second gas channel (520) is in communication with the first gas channel, at least one of the first bottom support (500) and the second bottom support (600) is provided with a plurality of exhaust holes (530), and the second gas channel (520) is in communication with the inner cavity (110) through the plurality of exhaust holes (530).

3. The battery cell (1) according to claim 2, wherein the side of at least one of the first bottom support (500) and the second bottom support (600) facing the second side wall (130) is configured with a plurality of supporting ribs (540), the second gas channel (520) is defined between two adjacent supporting ribs (540).

4. The battery cell (1) according to claim 3, wherein each supporting rib (540) has a height ranging from 0.5 mm to 3 mm.

5. The battery cell (1) according to any one of claims 2 to 4, wherein the first gas channel (510) extends along a direction perpendicular to the second side wall (130), and the second gas channel (520) extends along a length direction of the second side wall (130).

6. The battery cell (1) according to any one of claims 1 to 5, wherein the dimension of the electrode core (400) in the length direction of the second side wall (130) is L₁, and a length of each of the first bottom support (500) and the second bottom support (600) is L₂, wherein L₁ and L₂ meet: 0.04≤L₂/L₁≤0.45.

7. The battery cell (1) according to claim 6, wherein L₁ and L₂ further meet: L₁≤500mm, and L₂≥20mm.

8. The battery cell (1) according to any one of claims 1 to 7, wherein the first bottom support (500) comprises a first side plate (550) and a first bottom plate (560) connected to each other, the first bottom plate (560) is connected to the second side wall (130), the first bottom plate (560) extends along the length direction of the second side wall (130), one end of the first side plate (550) is connected to the first bottom plate (560), and the other end of the first side plate (550) is connected to one end of the first side wall (120); and
the second bottom support (600) comprises a second side plate (610) and a second bottom plate (620) connected to each other, the second bottom plate (620) is connected to the second side wall (130), the second bottom plate (620) extends along the length direction of the second side wall (130), one end of the second side plate (610) is connected to the second bottom plate (620), and the other end of the second side plate (610) is connected to the other end of the first side wall (120),
wherein the first bottom plate (560) is spaced apart from the second bottom plate (620), and the first bottom plate (560) and the second bottom plate (620) define the first gas channel (51).

9. The battery cell (1) according to claim 8, wherein a side of the first side plate (550) facing the electrode core (400) is arranged with a first reinforcing rib (551), and the first reinforcing rib (551) extends along a length direction of the first side plate (550); and
a side of the second side plate (610) facing the electrode core (400) is arranged with a second reinforcing rib (611), and the second reinforcing rib (611) extends along a length direction of the second side plate (610).

10. The battery cell (1) according to claim 8 or 9, wherein the first side plate (550) is parallel to the second side plate (610) and perpendicular to the second side wall (130).

11. The battery cell (1) according to any one of claims 8 to 10, wherein the first side plate (550) is connected, through an insulating spacer ring (800), to the one end of the first side wall (120), and the second side plate (610) is connected, through the insulating spacer ring (800), to the other end of the first side wall (120); and
a side of the insulating spacer ring (800) facing the inner cavity (110) is arranged with a first limiting protrusion (121) and a second limiting protrusion (122), the first side plate (550) abuts against a side of the first limiting protrusion (121) facing away from the second limiting protrusion (122), and the second side plate (610) abuts against a side of the second limiting protrusion (122) facing away from the first limiting protrusion (121).

12. The battery cell (1) according to any one of claims 1 to 11, wherein the explosion-proof hole (131) is located at a center of the electrode core (400) in a thickness direction; and/or
the explosion-proof hole (131) is located at a center of the electrode core (400) in the length direction of the second side wall (130).

13. The battery cell (1) according to any one of claims 1 to 12, further comprising:
an insulating film (700), the insulating film (700) being arranged at a side of the explosion-proof valve (300) facing the inner cavity (110).

14. The battery cell (1) according to any one of claims 1 to 13, wherein the terminal post (200) is arranged on the first side wall (120).

15. The battery cell (1) according to any one of claims 1 to 14, wherein the terminal post (200) comprises a positive electrode terminal post (210) and a negative electrode terminal post (220), the housing (100) is an aluminum housing, the positive electrode terminal post (210) is electrically connected to the housing (100), and a difference between the voltage of the positive electrode terminal post (210) and the voltage of the housing (100) is not less than 0 V and not greater than 2.5 V

16. The battery cell (1) according to any one of claims 1 to 14, wherein the terminal post (200) comprises a positive electrode terminal post (210) and a negative electrode terminal post (220), the housing (100) is a steel housing, the negative electrode terminal post (220) is electrically connected to the housing (100), and a difference between the voltage of the housing (100) and the voltage of the negative electrode terminal post (220) is not less than 0 V and not greater than 2.5 V

17. The battery cell (1) according to any one of claims 1 to 16, wherein the housing (100) comprises:
a housing body (140), wherein the second side wall (130) and the inner cavity (110) are formed on the housing body (140), the housing body (140) is provided with an opening facing the second side wall (130), and the opening is in communication with the inner cavity (110); and
a housing cover (150), wherein the housing cover (150) is mounted to the housing body (140) and covers the inner cavity (110), the first side wall (120) is formed on the housing cover (150), and the terminal post (200) is connected to the housing cover (150).

18. A battery pack (2), comprising:
a box (3); and
a battery cell according to any one of claims 1 to 17, the battery cell (1) being mounted in the box (3), with the explosion-proof valve (300) facing a bottom wall of the box (3).

19. Avehicle (4), comprising: a battery cell (1) according to any one of claims 1 to 17 or a battery pack (2) according to claim 18, with the first side wall (120) being located above the second side wall (130).
